# EUROPEAN PATENT APPLICATION

(11) **EP 3 035 268 A1**
(43) Date of publication of application: **22.06.2016**
(21) Application number: 14197894.0
(22) Date of filing: 15.12.2014
(51) Int. Cl.: G06Q 20/32, G06Q 20/40

(54) **Payment system with reduced user interaction**

(71) Applicant: MASTERCARD INTERNATIONAL, INC., Purchase, NY 10577-2509 (US)
(72) Inventor: Elder, Stephen, Dublin (IE); Lawless, Paul, Dublin 18 (IE)
(74) Representative: Karl, Christof

(57) **Abstract**

The present invention proposes a method for facilitating automatic payment in a payment system which requires less interaction by both the credit card user and store clerks than current payment systems. The method comprises the steps of specifying at least one secure geographic location, where payments within a payment system are to be authorized, providing an identifier of a vehicle to the payment system, detecting a connection between a specific portable device and the vehicle, detecting a current geographic location of the portable device and/or the vehicle, comparing the current geographic location with the secure geographic location, authorizing the granting of payment requests received by the payment system and relating to the identifier of the vehicle if the current geographic location is within or associated with the secure geographic location and if the connection between the portable device and the vehicle continues to exist.

## Description

### Background

Paying with credit cards today requires a credit card user to perform certain steps. If a credit card user uses a classical physical credit card, the credit card user either needs to hand over the credit card to a clerk or in a self-service scenario to swipe the credit card. In both cases the credit card user needs to provide additional information, such as his signature or personal identification number (PIN). If a credit card user uses a virtual credit card on the smart phone, he or she needs to at least have a code representing the credit card scanned in order to pay. All these scenarios require multiple steps to be performed in order to pay, which are time-consuming for both the credit card user and store clerks. The steps necessary to pay by credit card can be even more time-consuming in cases where the credit card user is in his car. For example, a customer at a gas station in Europe usually needs to walk from the pump to the main building of the gas station in order to pay, and in North America the customer would at least be required to swipe his credit card at the pump and provide his ZIP code. In another example, in order to pay for parking in a parking lot, a customer needs to retain a paper ticket issued to the customer upon entering the parking lot. Then, prior to leaving the parking lot, the customer needs to locate a payment terminal, which can be difficult, especially in multi-story parking lots. Other situations, in which a credit card user is in a car and needs to perform time-consuming steps in order to pay include, but are not limited to, drive throughs or drive in cinemas. Furthermore, similar issues arise when a credit card user is on a boat and needs to pay, for example, marina fees.

Therefore, in order to save time and provide a more streamlined payment experience, a need exists to reduce the amount of steps credit card users and store clerks have to perform in order process credit card payments. At the same time, this need has to be addressed in a way which does not compromise on the security of payment transactions.

### Summary of Invention

In order to improve the above-mentioned issues with current payment processes, the present invention proposes a method for facilitating automatic payment in a payment system which requires less interaction by both the credit card user and store clerks than current payment systems. The present invention eliminates current authentication steps such as handing over the credit card to store clerk, swiping credit cards and providing certain authentication information and the like and replaces them with authentication steps automatically performed by the payment system. These authentication steps additionally improve on the security of current payment systems as identity theft is more difficult with the proposed method.

A first embodiment of the invention provides a method for facilitating automatic payment in a payment system, comprising the steps of specifying at least one secure geographic location, where payments within a payment system are to be authorized, providing an identifier of a vehicle to the payment system, detecting a connection between a specific portable device and the vehicle, detecting a current geographic location of the portable device and/or the vehicle, comparing the current geographic location with the secure geographic location, authorizing the granting of payment requests received by the payment system and relating to the identifier of the vehicle if the current geographic location is within or associated with the secure geographic location; and the connection between the portable device and the vehicle continues to exist. This method automates all steps necessary to grant payments in scenarios where a customer arrives with his vehicle at a payment receiver. For example, the need for a customer to perform any steps in order to pay at a gas station could be eliminated by this method. Since the method relies on the vehicle and the portable device of the user, this method provides a more secure payment system because it is less likely that someone manages to obtain the vehicle and the portable device of the user than only the credit card and the signature of the user. Furthermore, anybody using the vehicle and the portable device would still have to know where the secure geographic locations are which the user or the system defined.

According to a second embodiment of the invention, in the first embodiment, the information about the at least one secure geographic location is stored either in the vehicle or the specific portable device or both. Storing this information in the vehicle or the car makes it easier to for the vehicle or the portable device to compare the current geographic location with the secure geographic location.

According to a third embodiment of the invention, in any of the preceding embodiments, the identifier of the vehicle is the registration number shown on the license plate of the vehicle. This enables payment receivers to easily identify the user, for example with an already-installed automatic number plate recognition system (ANPR), or potentially even a security camera system.

According to a fourth embodiment of the invention, in any of the preceding embodiments, the connection between the specific portable device and the vehicle is provided by a communication interface.

According to a fifth embodiment of the invention, in the fourth embodiment, all connections between the specific portable device and the vehicle via the communication interface are associated with the same unique communication identifier. By associating all connections with the same unique communication identifier, connections can be correctly identified every time to be the specific connection between the vehicle and the portable device.

According to a sixth embodiment of the invention, in the fifth embodiment, the method further comprises the step of generating the unique communication identifier upon first detection of a connection between the specific portable device and the vehicle.

According to a seventh embodiment of the invention, in the sixth embodiment, the communication identifier is stored in the vehicle, the specific portable device or both. Storing the identifier in the vehicle and/or the specific portable device enables both to identify connections as the connection between the vehicle and the specific portable device.

According to an eighth embodiment of the invention, in the seventh embodiment, the step of detecting a connection between the specific portable device and the vehicle and/or a verification if the connection still exists are based on whether the identifier of the connection between the specific portable device and the vehicle corresponds to the stored communication identifier. By basing the step of detecting the connection and the step of verifying on the identifier of the connection, this step can be easily implemented with any existing communication interface using unique identifiers for its connections.

According to a ninth embodiment of the invention, in any of the preceding embodiments, the information about the at least one secure geographic location is stored at the payment system, information about the detected current geographic location and information about the existence of a connection between the specific portable device and the vehicle are repeatedly sent from the portable device and/or the vehicle to the payment system, and the payment system performs the step authorizing the granting of payment requests if, according to the received information about the detected current geographic location and the received information about the existence of a connection between the specific portable device, the current geographic location is within the secure geographic location and the connection between the portable device and the vehicle exists. By storing this information and by having these steps performed by the payment system, the method for facilitating payment does not have to rely on the vehicle and/or the portable device for anything else than providing the necessary information to perform the steps to grant payments. This is advantageous since the capabilities of the vehicle and/or the portable device can be limited and, because they are provided by the user, are outside of the control of the provider of the payment system.

According to a tenth embodiment of the invention, in the first to eighth embodiments, the step of authorizing the granting of payment requests further comprises at the portable device and/or the vehicle, generating a payment authorization message if the current geographic location is within the secure geographic location and if it is verified that the connection between the portable device and the vehicle continues to exist and sending the payment authorization message from the portable device and/or the vehicle to the payment system. If the vehicle and/or the portable device generate the payment authorization message, only little information needs to be provided to the payment system since the bulk of the information is processed directly by the vehicle and/or the portable device. Since little information needs to be sent to the payment system, having the vehicle and/or the portable device process most of the information is more secure as this carries a limited risk of having information intercepted.

According to an eleventh embodiment of the invention, in the tenth embodiment, information of the current geographic location is sent from the portable device and/or the vehicle to the payment system, e.g. as a part of the payment authorization message.

According to a twelfth embodiment of the invention, in the tenth embodiment, the identifier of a vehicle is provided to the payment system as a part of the payment authorization message. This enables any payment receiver who captures the vehicle identifier of a user to request payment only by sending the vehicle identifier to the payment system.

According to a thirteenth embodiment of the invention, in the tenth to twelfth embodiment, the method further comprises the step of deauthorizing the granting of payment requests relating to the identifier of the vehicle, by the steps of at the portable device and/or the vehicle, generating a payment authorization end message when the connection between the specific portable device and the vehicle is no longer detected and sending the payment authorization end message from the portable device and/or the vehicle to the payment system. If payments are no longer granted if the connection between the vehicle and the portable device does not exist anymore, unwanted/unauthorized payments can be prevented when users distance themselves too far from their vehicles.

According to a fourteenth embodiment of the invention, in the tenth to thirteenth embodiment, the payment system stops granting payment requests after a predetermined period of time from the receipt of a payment authorization message has expired. Stopping to authorize payments after a predetermined time eliminates the need to generate a payment authorization end message.

According to a fifteenth embodiment of the invention, in the fourteenth embodiment, the predetermined period of time can be extended by the receipt of a new payment authorization message or an equivalent message from the portable device and/or the vehicle before the predetermined period of time has expired.

According to a sixteenth embodiment of the invention, in any of the preceding embodiments, a payment request comprises the identifier of the vehicle and information identifying the payment receiver. This enables any payment receiver to request payment only by sending the vehicle identifier and information identifying the payment receiver to the payment system.

According to a seventeenth embodiment of the invention, in any of the preceding embodiments, the identifier of the vehicle is automatically captured by a system of the payment receiver when the vehicle is at a geographic location associated with the payment receiver. This allows expediting the entire payment process, as the payment receiver is automatically in possession of all necessary information in order to send a payment request.

According to an eighteenth embodiment of the invention, in any of the preceding embodiments, a payment request received by the payment system from a payment receiver is granted only if the payment system determines that a geographic location associated with the payment receiver is associated with the secure geographic location. Thus, no payment can accidentally be authorized for a payment receiver not located at a secure geographic location.

According to a nineteenth embodiment of the invention, in any of the preceding embodiments, the step of specifying at least one secure geographic location is performed by specifying an entity, e.g. a payment receiver, which is associated with the secure geographic location.

According to a twentieth embodiment of the invention, in any of the preceding embodiments, the communication interface is a cable interface.

According to a twenty-first embodiment of the invention, in any of the preceding embodiments, the communication interface is a short range radio communication interface.

According to a twenty-second embodiment of the invention, in any of the preceding embodiments, the short range radio communication interface is one of Bluetooth or Wi-Fi.

According to a twenty-third embodiment of the invention, in any of the preceding embodiments, the payment receiver is one of a gas station, a bank, a drive-thru restaurant, a drive-in cinema, a parking lot, a car wash or any drive-thru service provider.

A twenty-fourth embodiment of the invention provides a method for facilitating automatic payment in a payment system, the payment system performing the steps of receiving a payment request from a payment receiver, wherein the payment request comprises at least a monetary amount, an identifier of a vehicle and a location of the payment receiver, verifying if a payment authorization message comprising the identifier of the vehicle and the location of the payment receiver has been received and authorizing the payment request if the payment authorization message has been received. By having the payment system perform these steps, the payment process is simplified and rendered more secure, as the payment process does not rely on payment card and signatures but on the vehicle of the users of the payment system.

According to a twenty-fifth embodiment of the invention, in the twenty-fourth embodiment, the method further comprises the step of sending a payment grant message to the payment receiver indicating that the payment has been granted. The payment system thereby ensures that the payment receiver is aware that the payment request has been positively processed.

A twenty-sixth embodiment of the invention provides a method for facilitating automatic payment in a payment system by a payment receiver, comprising the steps of sending a payment request to a payment system, wherein the payment request comprises at least a monetary amount, an identifier of a vehicle and a location of the payment receiver.

According to a twenty-seventh embodiment of the invention, in the twenty-sixth embodiment, the method further comprises the step of receiving a payment grant message from the payment system indicating that the payment has been granted.

A twenty-eighth embodiment of the invention provides a computing device comprising a processor and a memory and being configured to perform the methods according to any one of the first to twenty-seventh embodiment.

A twenty-ninth embodiment of the invention provides a computer program having instructions which when executed by a computing device cause the computing device to perform the methods according to any one of the first to twenty-seventh embodiment.

A thirtieth embodiment of the invention provides a computer readable medium having stored thereon a computer program according to the twenty-ninth embodiment.

A thirty-first embodiment of the invention provides a data stream which is representative of a computer program according to the twenty-ninth embodiment.

### Brief Description of the Drawings

- Fig. 1: shows entities involved in the exchange of information when performing a method for facilitating payment in a payment system according to an embodiment of the present invention.
- Fig. 2: shows a flowchart illustrating the method for facilitating automatic payment in a payment system according to an embodiment of the present invention.
- Fig. 3: shows a flowchart illustrating the steps performed by the payment system for facilitating automatic payment in a payment system according to an embodiment of the present invention.
- Fig. 4: shows a flowchart illustrating the steps performed by a payment receiver for facilitating automatic payment in a payment system according to an embodiment of the present invention.

Like reference signs in the various drawings indicate like elements.

### Detailed Description of Preferred Embodiments of the Invention

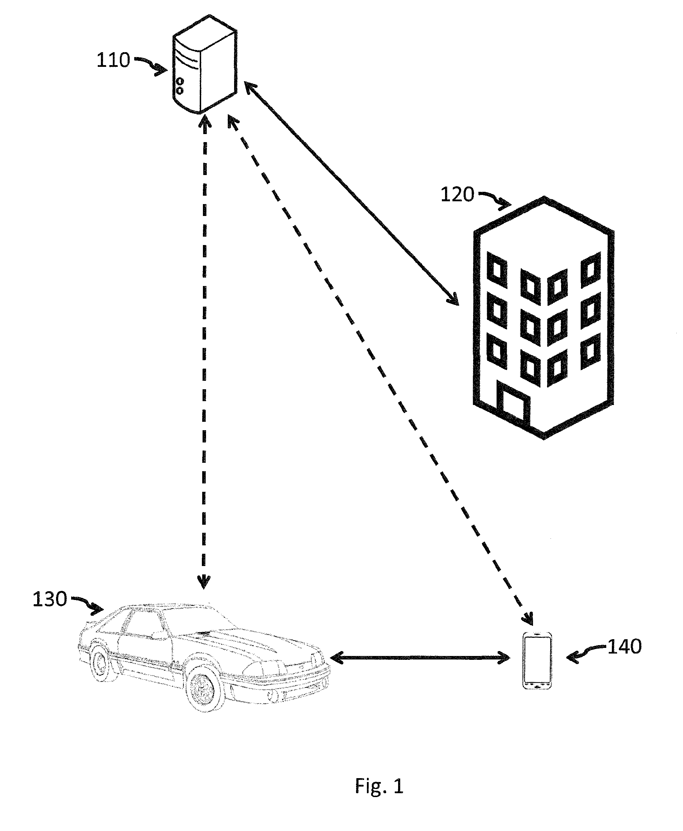

Figure 1 shows entities involved in the exchange of communication when performing the method for facilitating automatic payment in a payment system. Vehicle 130 and portable device 140 are connected to each other and exchange certain information. Vehicle 130 and/or portable device 140 communicate with payment system 110 in order to authorize payments. Payment receiver 120 sends payment requests to payment system 110 in order to request payment for goods or services a customer, who arrived at the location of the payment receiver 120 with his or her vehicle 130 and portable device 140. If payments have been authorized, payment system 110 authorizes the payment request received from payment receiver 120.

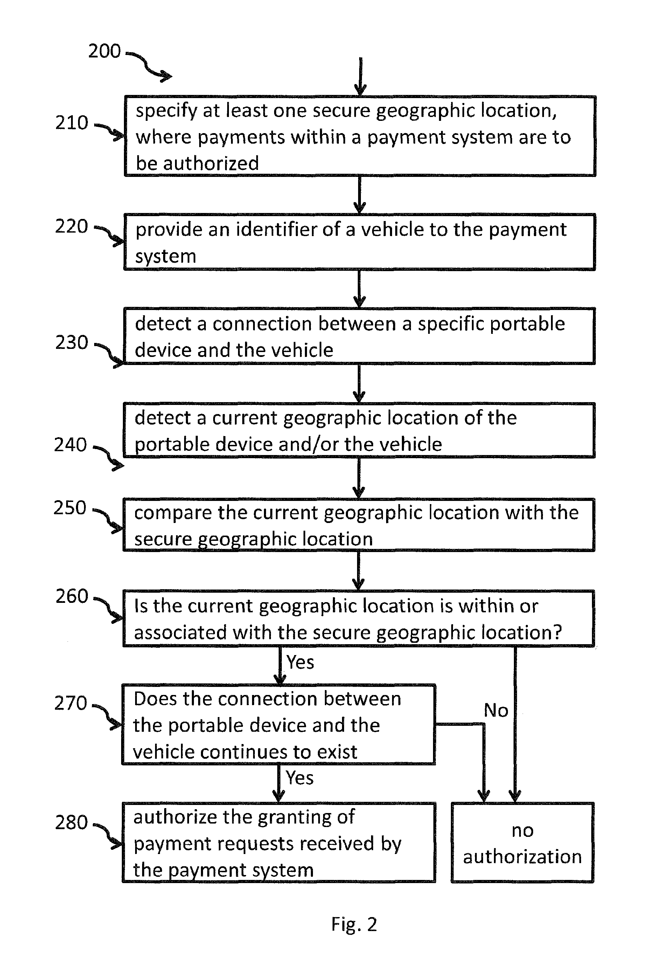

The exchange of information and the authorization of payments will now be explained in detail with regard to Figures 2 to 4.

Figure 2 shows an embodiment of the method for facilitating automatic payment 200. In step 210 the method 200 specifies at least one secure geographic location, where payments within a payment system are to be authorized. These secure geographic locations can be entities such as gas stations, banks, parking lots, or any geographic location where a user would typically pay by credit card. The entities are also referred to as payment receivers since they all refer to entities or locations offering paid services. The secure geographic locations can be defined by their addresses, their geographic coordinates or any other means suitable for defining a geographic location. In some embodiments, the secure geographic location can also be an area where payments are to be authorized instead of a single entity. For example, the secure geographic location can be defined by a circle whose center can be an entity or any other point, such as a city center or the residence of a user. In this example payments can be authorized in the entire area covered by the circle. The radius of the circle can either be fixed or can be determined by the payment system on an individual basis. It is to be noted that the definitions of the at least one secure geographic location are not limited to the examples provided above but can be defined in any other way as warranted by the payment system. Payment system refers to any kind of system processing payment requests between a user and a payment receiver and can be any kind of technical infrastructure adapted to perform said processing.

In step 220, the method 200 provides an identifier of a vehicle to the payment system. The payment system authorizes payments at a secure geographic location only if the user is present at the at least one secure geographic location with his vehicle. A vehicle is any kind of mobile machine adapted to transport passengers or cargo. While some embodiments are described with regard to cars, a vehicle should not be construed as being limited to cars as the teachings of the present disclosure can also be applied to any other kind of vehicle. Therefore, in order to identify the vehicle of the user, the payment system requires an identifier of the vehicle. The identifier can for example be provided by the user or be obtained by the payment system by checking the vehicle registry. In some embodiments, the identifier of the vehicle is the registration number shown on the license plate of the vehicle.

Continuing with step 230, the method 200 detects a connection between a specific portable device and the vehicle. The specific portable device refers to any kind of portable device, such as a smartphone or tablet, which is used by the user and is connected to the vehicle via a communication interface. All connections between the vehicle and the communication interface are associated with the same unique communication identifier. The first time a connection between the specific portable device and the vehicle is detected, the unique communication identifier is generated. Any subsequent connection between the portable device and the vehicle via the same communication interface, e.g. every time the user returns to his vehicle, is associated with this communication identifier. The unique communication identifier can either be stored in the vehicle, the specific portable device or in both the vehicle and the specific portable device.

Furthermore, detecting the connection between the specific portable device and the vehicle and verifying if the connection still exists are both based on whether the identifier of the connection corresponds to the stored unique communication identifier. When first detecting the connection, the payment system compares the identifier of the connection with the stored unique communication identifier. Afterwards, the payment system can periodically check whether the connection still exists by comparing the identifier of the connection again with the stored unique communication identifier. Alternatively, the connection can timeout after a preset time.

The communication interface used by the payment system can be, but is not limited to, any one of a cable interface, a short range radio communication interface, Bluetooth or Wi-Fi.

In step 240, method 100 detects a current geographic location of the portable device and/or the vehicle. The current geographic location can be determined for example by GPS or Wi-Fi, based on cell tower locations or triangulation based on any of the aforementioned signals or any other signal or method suitable for detecting a geographic location. The signals can be detected by hardware located in the vehicle, in the portable electronic device or both. Based on the signals, the vehicle and the portable electronic device can detect their respective current geographic locations. Alternatively, the detected signals can be sent to the payment system in order to determine the current geographic location. Normally, the current geographic locations of both the portable device and the vehicle will be the same. However, if the current geographic locations of the portable device in the vehicle are detected with a very high resolution, their respective locations might differ slightly. For example, if the hardware used by the vehicle is located somewhere in the dashboard area and the portable device is located in a pocket of the jacket of the user who is currently standing next to a pump of a gas station, their respective current geographic locations differ slightly.

In step 250, method 200 compares the current geographic location with the secure geographic location. By comparing the current geographic location with the secure geographic location, the payment system can verify whether the vehicle and/or the portable device of the user are currently at the secure geographic location.

In steps 260 to 280, method 200 authorizes the granting of payment requests received by the payment system and relating to the identifier of the vehicle if the current geographic location is within or associated with the secure geographic location and the connection between the portable device and the vehicle continues to exist. Thus, method 100 uses the information obtained in steps 110 through 150 in order to grant payment requests.

In a first embodiment, the information about the at least one secure geographic location, which was specified in step 210, is stored in the payment system. Furthermore, the information about the detected current geographic location obtained in step 240 and information about the existence of a connection between the specific portable device and the vehicle obtained in step 230 are repeatedly sent from the portable device and/or the vehicle to the payment system. If, according to the received information about the detected current geographic location and the received information about the existence of a connection between the specific portable device, the current geographic location is within the secure geographic location and the connection between the portable device and the vehicle exists, the payment system performs steps 260 to 280, i.e. the payment system authorizes the payment requests.

The payment system will continue to authorize payments until the current geographic location of the portable device and/or the vehicle is no longer within the secure geographic location or if the connection between the portable device and the vehicle no longer exists. Alternatively, the payment system can also stop authorizing payments after a predetermined amount of time has expired.

For example, if the payment receiver is a parking lot, a camera system at the entrance of the parking lot may capture the license plate of the vehicle of the user. When the user leaves the parking lot with his vehicle, the payment receiver/the parking lot may send a payment request to the payment system which comprises the vehicle identifier, information identifying the payment receiver and an amount to be paid. Based on this payment request, the payment system first identifies the user related to the vehicle identifier, which was provided to the payment system in step 220. Furthermore, the payment request may include the geographic location of the payment receiver. The payment system compares the geographic location of the payment receiver with the secure geographic location specified in step 210. If the geographic location of the payment receiver is within the secure geographic location, the payment system compares the current geographic location of the portable device and/or the vehicle, which was detected in step 240, with the secure geographic location. If the current geographic location is within the secure geographic location and the payment system has received information about the existence of the connection between the specific portable device and the vehicle, the payment system authorizes payment of the payment request, i.e., payment of the parking fee.

In a second embodiment, the portable device and/or the vehicle generates a payment authorization message if the current geographic location is within the secure geographic location and if it is verified that the connection between the portable device and the vehicle continues to exist. This authorization message is then sent to the payment to the payment system. Therefore, in the second embodiment, steps 260 to 280 are performed by the vehicle and/or the portable device.

The portable device and/or the vehicle may also send information pertaining to the current geographic location to the payment system, either alone or as part of the payment authorization message. Furthermore, the payment authorization message may include the identifier of the vehicle. However, the identifier of the vehicle can already be stored in the payment system or, as described above with regard to step 220, may already have been obtained by the payment system.

In order to stop authorizing payments, the portable device and/or the vehicle generate a payment authorization end message when the connection between the specific portable device and the vehicle is no longer detected or if the current geographic location is no longer within the secure geographic location. The payment authorization end message is then sent to the payment system to stop the authorization of payments. Alternatively, the payment system stops authorizing payments after a predetermined period of time after the receipt of the payment authorization message has expired. This predetermined period of time can be extended by receipt of the new payment authorization message or an equivalent message from the portable device and/or the vehicle before the expiration of the predetermined period of time.

For example, if a user arrives at a gas station, the portable device and/or the vehicle detects that the current geographic location is within the secure geographic location because the user specified the gas station as a secure geographic location. Furthermore, the portable device and the vehicle are connected via a communication interface associated with the same unique communication identifier. Therefore, the connection between the vehicle and the portable device is verified. Consequently, the portable device and/or the vehicle generate a payment authorization message and send it to the payment system upon arriving at the gas station. A camera at the gas station detects the license plate of the vehicle the user. The user fills his tank and after finishing, the gas station attendant sends a payment request on behalf of the gas station to the payment system comprising the vehicle identifier of the user obtained via the camera from the license plate. Based on the vehicle identifier, the payment system identifies the user and since the payment system received a payment authorization message, the payment system authorizes the payment request of the gas station. Upon leaving the gas station the portable device and/or the vehicle generates an authorization end message and send it to the payment system. Alternatively, the payment authorization by the payment system expires after a predetermined amount of time from arriving at the gas station, e.g. after 10 minutes. If the 10 minutes are not enough, for example because many cars are waiting at the gas station, the vehicle and/or the portable device can send a new payment authorization message to extend the time during which payments are to be authorized. Alternatively, the user can extend the time by pushing a button provided by the vehicle and/or the portable device.

It is to be noted that the steps of the method 200 for facilitating automatic payment in a payment system do not have to be performed in the order shown in Fig. 2. For example, steps 210 and 220 can be performed in a different order and steps 230 to 250 can be repeatedly performed, not just a single time as indicated in Fig. 2.

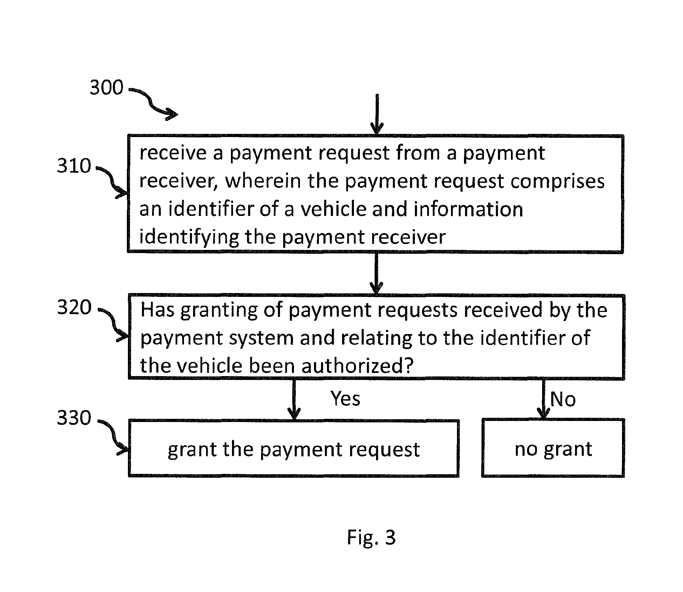

Fig. 3 shows a flowchart illustrating the steps performed by the payment system for facilitating automatic payment in a payment system. As described above with regard to Fig. 2, the payment system receives a payment request from the payment receiver in step 310, which request comprises an identifier of the vehicle of the user and information identifying the payment receiver. The payment system then grants the payment request in step 330 if the granting of payment requests received by the payment system and relating to the identifier of the vehicle had been authorized in step 320 as described above.

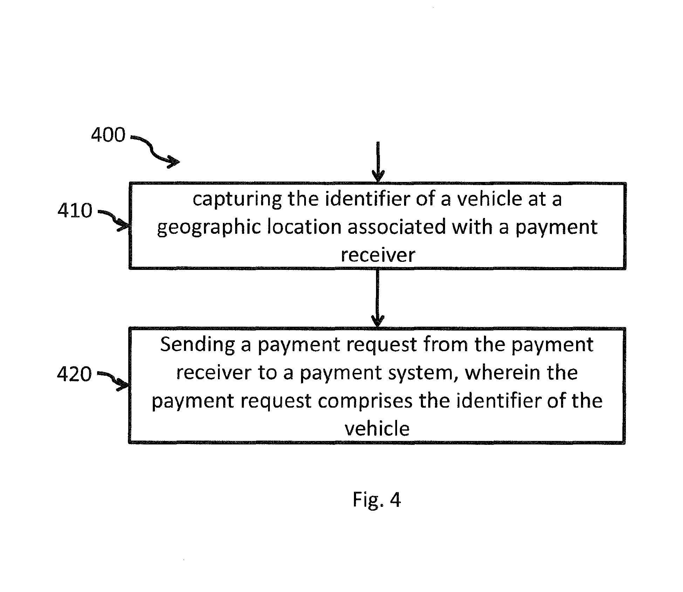

Fig. 4 shows a flowchart illustrating the analogous steps performed by the payment receiver. The payment receiver captures the identifier of a vehicle at a geographic location associated with the payment receiver in step 410. Examples for step 410 are the capturing of the license plate by the parking lot or the gas station as described above with reference to Fig. 2. The payment receiver then sends a payment request in step 420 to the payment system wherein the payment request comprises the identifier of the vehicle. Referring back to the example of the parking lot, the parking lot/payment receiver performs step 420 when the user leaves the parking lot with his vehicle.

## Claims

1. A method for facilitating automatic payment in a payment system, comprising the steps of:
specifying at least one secure geographic location, where payments within a payment system are to be authorized;
providing an identifier of a vehicle to the payment system;
detecting a connection between a specific portable device and the vehicle;
detecting a current geographic location of the portable device and/or the vehicle;
comparing the current geographic location with the secure geographic location;
authorizing the granting of payment requests received by the payment system and relating to the identifier of the vehicle if:
the current geographic location is within or associated with the secure geographic location; and
the connection between the portable device and the vehicle continues to exist.

2. The method according to any of the preceding claims, wherein the connection between the specific portable device and the vehicle is provided by a communication interface, wherein all connections between the specific portable device and the vehicle via the communication interface are associated with the same unique communication identifier. and wherein the method further comprises the step of generating the unique communication identifier upon first detection of a connection between the specific portable device and the vehicle.

3. The method according to claim 2, wherein the step of detecting a connection between the specific portable device and the vehicle and/or a verification if the connection still exists are based on whether the identifier of the connection between the specific portable device and the vehicle corresponds to the stored communication identifier.

4. The method according to any one of the preceding claims, wherein the information about the at least one secure geographic location is stored at the payment system, information about the detected current geographic location and information about the existence of a connection between the specific portable device and the vehicle are repeatedly sent from the portable device and/or the vehicle to the payment system, and the payment system performs the step authorizing the granting of payment requests if, according to the received information about the detected current geographic location and the received information about the existence of a connection between the specific portable device, the current geographic location is within the secure geographic location and the connection between the portable device and the vehicle exists.

5. The method according to claims 1 to 3, wherein the step of authorizing the granting of payment requests further comprises:
at the portable device and/or the vehicle, generating a payment authorization message if the current geographic location is within the secure geographic location and if it is verified that the connection between the portable device and the vehicle continues to exist; and
sending the payment authorization message from the portable device and/or the vehicle to the payment system.

6. The method according to claim 5, wherein information of the current geographic location is sent from the portable device and/or the vehicle to the payment system, e.g. as a part of the payment authorization message.

7. The method according to any one of claims 5 or 6, further comprising the step of deauthorizing the granting of payment requests relating to the identifier of the vehicle, by the steps of:
at the portable device and/or the vehicle, generating a payment authorization end message when the connection between the specific portable device and the vehicle is no longer detected or if the current geographic location is no longer within the secure geographic location;
sending the payment authorization end message from the portable device and/or the vehicle to the payment system.

8. The method according to any one of claims 5 to 7, wherein the payment system stops granting payment requests after a predetermined period of time from the receipt of a payment authorization message has expired and wherein the predetermined period of time can be extended by the receipt of a new payment authorization message or an equivalent message from the portable device and/or the vehicle before the predetermined period of time has expired.

9. The method according to any of the preceding claims, wherein a payment request comprises the identifier of the vehicle and information identifying the payment receiver.

10. The method according to any of the preceding claims, wherein a payment request received by the payment system from a payment receiver is granted only if the payment system determines that a geographic location associated with the payment receiver is associated with the secure geographic location.

11. A method for facilitating automatic payment in a payment system, the payment system performing the steps of:
receiving a payment request from a payment receiver, wherein the payment request comprises an identifier of a vehicle and information identifying the payment receiver; and
granting the payment request if the granting of payment requests received by the payment system and relating to the identifier of the vehicle had been authorized.

12. A method for facilitating automatic payment in a payment system by a payment receiver, comprising the steps of:
capturing the identifier of a vehicle at a geographic location associated with a payment receiver;
sending a payment request from the payment receiver to a payment system, wherein the payment request comprises the identifier of the vehicle.

13. Computing device comprising a processor and a memory and being configured to perform the methods according to any one of claims 1 to 12.

14. Computer program having instructions which when executed by a computing device cause the computing device to perform the methods according to any one of claims 1 to 12.

15. Computer readable medium having stored thereon a computer program according claim 14.
